(19) Europäisches Patentamt
European Patent Office
Office européen des brevets

(11) Veröffentlichungsnummer: **0 167 029**
**B1**

(12) # EUROPÄISCHE PATENTSCHRIFT

(45) Veröffentlichungstag der Patentschrift: **06.09.89**

(51) Int. Cl.⁴: **C 09 D 5/44**

(21) Anmeldenummer: **85107178.7**

(22) Anmeldetag: **11.06.85**

(54) **Bindemittel für die kathodische Elektrotauchlackierung, die nicht-tertiäre basische Aminogruppen neben phenolischen Mannichbasen enthalten.**

(30) Priorität: **16.06.84 DE 3422457**

(43) Veröffentlichungstag der Anmeldung: **08.01.86 Patentblatt 86/2**

(45) Bekanntmachung des Hinweises auf die Patenterteilung: **06.09.89 Patentblatt 89/36**

(84) Benannte Vertragsstaaten: **AT BE CH DE FR GB IT LI NL SE**

(56) Entgegenhaltungen:
**EP-A- 0 003 479**
**EP-A- 0 068 243**
**EP-A- 0 080 165**
**DE-A- 2 320 536**
**DE-A- 2 730 642**
**US-A- 4 369 290**

**Die Akte enthält technische Angaben, die nach dem Eingang der Anmeldung eingereicht wurden und die nicht in dieser Patentschrift enthalten sind.**

(73) Patentinhaber: **BASF Lacke + Farben Aktiengesellschaft, Max-Winkelmann-Strasse 80, D-4400 Münster (DE)**

(72) Erfinder: **Schupp, Eberhard, Dr., Tilsiter Weg 4, D-6830 Schwetzingen (DE)**
Erfinder: **Osterloh, Rolf, Dr., Am Wehrhaus 16 a, D-6718 Gruenstadt (DE)**
Erfinder: **Loch, Werner, Dr., In der Bleiche 2, D-6703 Erpolzheim (DE)**
Erfinder: **Ahlers, Klaas, Dr., Foehrenweg 21, D-4400 Muenster (DE)**

(74) Vertreter: **Rämisch, Friedrich, Dr. et al, BASF Aktiengesellschaft Carl-Bosch-Strasse 38, D-6700 Ludwigshafen (DE)**

**EP 0 167 029 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Bindemittel, welche nicht-tertiäre basische Aminogruppen neben phenolischen Mannichbasen enthalten und mit denen sich Elektrotauchlacke herstellen lassen, die sich durch hohen Bad-pH-Wert und niedrige Einbrenntemperatur auszeichnen.

Die meisten der gebräuchlichen Elektrotauchlacke liegen erst bei pH-Werten unterhalb von 6,5, oft sogar bei solchen unter 5, als stabile und damit einsatzfähige Dispersionen vor. Dies bedeutet aber, daß sie nur in teuren, mit Kunststoff ausgekleideten oder aus Edelstahl bestehenden Anlagen verwendet werden können. Außerdem benötigen übliche Elektrotauchlacke Einbrenntemperaturen von etwa 180 bis 195 °C.

Die DE-OS 2 320 536 beschreibt hitzehärtbare Kondensationsprodukte, bestehend aus Mannichbasen mehrwertiger Phenole, welche, gegebenenfalls in Kombination mit Stoffen, die normalerweise mit Phenol/Formaldehydharzen härtbar sind, als Überzugs-, Imprägnierungs- und Verklebungsmittel verwendet werden können.

In der DE-AS 2 320 301 werden selbstvernetzende Kunstharze und ihre Verwendung für die kathodische Elektrotauchlackierung elektrisch leitender Metalloberflächen beschrieben. Ihre Herstellung erfolgt durch Umsetzung von niedermolekularen Mannich-Basen aus mehrwertigen Phenolen mit Polyepoxidverbindungen.

Selbstvernetzende Mannich-Harze und ihr Einsatz als Bindemittel für kathodische Elektrotauchlacke werden auch in der DE-AS 2 419 179 beschrieben. Neben niedermolekularen mehrwertigen Phenolen werden auch Präpolymere aus niedermolekularen mehrwertigen Phenolen und niedermolekularen Epoxidharzen für die Mannich-Reaktion eingesetzt.

In der US-PS 4 312 799 werden Aminoharze beschrieben, die aus Reaktionsprodukten von Bisphenolen mit einem Unterschuß an Epoxidharzen hergestellt werden, wobei die entstandenen Präpolymeren, wie in der DT-AS 2 419 179 beschrieben, mit Formaldehyd und sekundären Aminen in Mannichbasen überführt und mit weiterem Epoxidharz umgesetzt werden.

In allen Fällen enthalten die Reaktionsprodukte ausschließlich tertiäre Aminogruppen. Die Vernetzung beim Einbrennen kann daher im wesentlichen nur über eine Kondensation der Phenolkerne über Methylenbrücken ähnlich der Härtung von Phenolharzen erfolgen, wozu Einbrenntemperaturen oberhalb von 160 °C, bevorzugt etwa 180 °C benötigt werden.

Die US-PS 4 369 290 bezieht sich auf ein hitzehärtbares Überzugsmittel, welches aus einem Polymer mit aktiven Wasserstoffgruppen und einem Vernetzer besteht. Als Vernetzer wird dabei ein aminomethylsubstituiertes aromatisches Ring-Phenol-Derivat verwendet, welches einen aromatischen Ring, eine an den aromatischen Ring angebundene freie Hydroxylgruppe und mindestens zwei an den aromatischen Ring gebundene Methylenamin-Gruppen enthält. Derartige Produkte werden auch für den Einsatz in kathodisch abscheidbaren Elektrotauchlacken empfohlen, wobei als Polymer mit aktiven Wasserstoffatomen ein solches mit basischen Gruppen, welches durch Protonieren mit Säuren wasserlöslich wird, verwendet werden muß. Für diesen Einsatzzweck sind die Produkte gemäß der US-PS 4 369 290 jedoch wenig geeignet, da die dabei zum Einsatz kommenden Vernetzer einen hohen Gehalt an stark basischen Gruppen aufweisen, die bei Zugabe von Säure ebenso wie die basischen Gruppen des Polymers mit aktiven Wasserstoffgruppen protoniert werden. Dies hat zur Folge, daß derartige Zusammensetzungen eine große Menge an Neutralisationsmittel benötigen, wodurch die elektrischen Eigenschaften des Lackbades negativ beeinflußt werden, so daß nur niedrige Umgriffe und geringe Spannungsfestigkeiten erzielt werden.

Überraschenderweise wurde nun gefunden, daß sich Elektrotauchlacke mit hoher Spannungsfestigkeit und hohem Umgriff herstellen lassen, wenn als Bindemittel eine Kombination aus

(A) einem Polymerisations-, Polykondensations- oder Polyadditionsprodukt mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten und

(B) einer oder mehreren phenolischen Mannichbasen, hergestellt aus einem oder mehreren mehrkernigen Polyphenolen, Formaldehyd oder einer Formaldehyd-liefernden Verbindung und einem oder mehreren sekundären aliphatischen Aminen,

verwendet wird, wobei zur Herstellung der Komponente (B) pro Äquivalent Phenol nicht mehr als ein Äquivalent sekundäres Amin und nicht mehr als 2 Äquivalente Formaldehyd eingesetzt werden.

Gegenstand der vorliegenden Erfindung ist ein durch Zusatz von Säure wasserverdünnbares Bindemittel für die kathodische Elektrotauchlackierung, das nicht-tertiäre basische Aminogruppen neben phenolischen Mannichbasen enthält, bestehend aus einem Gemisch oder Vorkondensat aus

(A) 50 bis 90 Gewichtsprozent eines Polymerisations-, Polykondensations- oder Polyadditionsprodukts mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten und

(B) 10 bis 50 Gewichtsprozent einer oder mehrerer phenolischer Mannichbasen, hergestellt aus

a) einem oder mehreren mehrkernigen Polyphenolen,

b) Formaldehyd oder einer Formaldehyd-liefernden Verbindung und

c) einem oder mehreren sekundären aliphatischen Aminen,

wobei die Summe der unter (A) und (B) genannten Prozentzahlen 100 ist, das dadurch gekennzeichnet ist, daß zur Herstellung der Komponente (B)

pro Äquivalent phenolischer Hydroxylgruppen des Polyphenols (a) nicht mehr als ein Äquivalent sekundäres Amin (c) und nicht mehr als 2 Äquivalente Formaldehyd eingesetzt werden.

Bevorzugt ist es, bei der Herstellung der Komponente (B) pro Äquivalent phenolischer Hydroxylgruppen des Polyphenols (a) 0,5 bis 1 Äquivalente sekundäres Amin (c) und 0,5 bis 2 Äquivalente Formaldehyd (b) einzusetzen.

Komponente (A) kann beispielsweise ein Umsetzungsprodukt aus einem aliphatischen Diamin und einem aromatischen Epoxidharz sein sowie zusätzlich durch weitere Umsetzung mit Mono- und/oder Dicarbonsäuren modifiziert sein und zur Herstellung der Komponente (B) kann als mehrkerniges Polyphenol beispielsweise ein Umsetzungsprodukt aus Bisphenol A und einem stöchiometrischen Unterschuß eines Diglycidylethers von Bisphenol A (beispielsweise pro Äquivalent phenolischer Hydroxylgruppen des Bisphenol A bis zu 0,8 Äquivalente Epoxidgruppen eines Diglycidylethers von Bisphenol A) verwendet werden.

Das Gemisch aus den Komponenten (A) und (B) kann auch bei erhöhter Temperatur partiell miteinander zur Reaktion gebracht werden.

Gegenstand der vorliegenden Erfindung ist außerdem ein Verfahren zur Herstellung des Bindemittels sowie die Verwendung dieses Bindemittels für die kathodische Elektrotauchlackierung elektrisch leitender Gegenstände, wobei das Bindemittel, gegebenenfalls mit anderen Bindemitteln, Pigmenten und anderen bei der Elektrotauchlackierung üblichen Hilfs- und Zusatzstoffen kombiniert, durch Zusatz einer Säure wasserverdünnbar gemacht wird.

Zu den Aufbaukomponenten des erfindungsgemäßen Bindemittels ist im einzelnen folgendes zu sagen:

Um die erfindungsgemäßen vorteilhaften Eigenschaften zu erhalten, ist es wesentlich, daß bei der Herstellung der Komponente (B) nicht mehr als ein Aminmolekül pro Phenolkern eingebaut wird. Es ist anzunehmen, daß das Amin dabei zusammen mit Formaldehyd selektiv in o-Stellung zur Hydroxylgruppe als Aminomethylengruppe eingebaut wird. Aufgrund der hohen Selektivität der Reaktion kommt es zu keiner nennenswerten Doppelsubstitution am gleichen Phenolkern. Es ist anzunehmen, daß die resultierenden aminomethylierten Phenole Gruppierungen gemäß Formel (I) tragen, also jeweils nur eine Aminomethylgruppe in o-Stellung zur phenolischen Hydroxylgruppe besitzen, welche durch Wasserstoffbrückenbildung in ihrer Basizität stark abgeschwächt ist.

$R_1$ und $R_2$ sind darin gleiche oder verschiedene Alkylgruppen mit 1 bis 10 Kohlenstoffatomen und können gegebenenfalls Substituenten, wie Hydroxyl- oder Ethergruppen tragen oder miteinander einen 5- bis 7-gliedrigen Ring bilden.

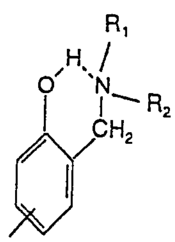

(I)

Bei der Herstellung von Elektrotauchbädern werden daher die als Komponente (B) eingesetzten phenolischen Mannichbasen nicht protoniert, so daß die elektrischen Eigenschaften der Bäder wie Spannungsfestigkeit, Umgriff und Abscheideäquivalent nicht beeinträchtigt werden.

(A) Als Komponente (A) kommen solche Polymerisations-, Polykondensations- oder Polyadditionsprodukte in Frage, die ein mittleres Molekulargewicht von 800 bis 8000, vorzugsweise 1200 bis 4000, besitzen und einen Gehalt an basischen, primären und/oder sekundären Aminogruppen von 0,8 bis 8 Äquivalenten pro 1000 Molekulargewichtseinheiten aufweisen.

Als Polymerisationsprodukte können z. B. Polyacrylate eingesetzt werden, die durch Copolymerisation von 10 bis 70 Gewichtsprozent an Methacrylestern oder Methacrylamiden, welche eine sekundäre Aminogruppe tragen wie z. B. Isopropylaminopropylmethacrylamid mit 30 bis 90 Gewichtsprozent an anderen Monomeren wie (Meth)-acrylestern, Acrylnitril, Styrol etc. hergestellt werden.

Als Polykondensationsprodukte sind z. B. Kondensationsprodukte aus Polycarbonsäuren und Polyaminen einsetzbar. Umsetzungsprodukte aus dimerisierten oder trimerisierten Fettsäuren und Polyaminen wie Ethylendiamin, 1,2- und 1,3-Diaminopropan, Diethylentriamin, Dipropylentriamin, Triethylentetramin etc. sind als Komponente (A) geeignet, sofern sie neben dem Amidstickstoff noch 0,8 bis 8 Äquivalente an basischen, primären und/oder sekundären Aminogruppen pro 1000 Molekulargewichtseinheiten enthalten.

Geeignete Polyadditionsprodukte sind vor allem die Umsetzungsprodukte von Polyepoxidverbindungen mit Aminen, die mindestens eine primäre Aminogruppe enthalten.

Eine Möglichkeit, um zu als Komponente (A) geeigneten Produkten mit primären und sekundären Aminogruppen zu kommen, ist die Umsetzung von überschüssigen primären Diaminen mit Epoxidharzen und anschließende Abtrennung des überschüssigen Amins bei erhöhter Temperatur und vermindertem Druck. Als Diamine kommen dafür vor allem solche mit 2 bis 6 Kohlenstoffatomen in Betracht, z.B. Ethylendiamin, 1,2- und 1,3-Diaminopropan, 1,4-Diaminobutan, Neopentandiamin und Hexamethylendiamin. Die Reaktionsprodukte können, falls gewünscht, mit Dicarbonsäuren kettenverlängert werden, z.B. mit Sebacinsäure oder dimerer Fettsäure. Durch das Verhältnis Dicarbonsäure zu Epoxid/Amin-Addukt kann man das gewünschte Molekulargewicht einstellen, z.B. kann man auf zwei Moleküle Epoxid/Amin-Addukt 1 Mol dimere Fettsäure einsetzen. Eine Mitverwendung von Monocarbonsäuren wie z.B. Stearinsäure oder Fettsäuren ist ebenfalls möglich. Auch kann statt einer Elastifizierung in der Kette oder in Verbindung damit durch Umsetzung mit langkettigen Monoepoxiden wie Hexadecylglycidylether oder Versaticsäureglydidylester eine endständige Plastifizierung durchgeführt werden.

Eine weitere Möglichkeit, als Komponente (A) geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin, das Ketimin von N-Methyl-ethylendiamin und das Ketimin von N-Aminoethylpiperazin. Die Ketime lassen sich in einfacher Weise auf den freien Aminen und einem Keton, z.B. Methylisobutylketon, unter Auskreisen von Wasser herstellen. Bei der Umsetzung mit Epoxidharzen reagiert nur die sekundäre Aminogruppe, anschließend kann das Ketimin durch einfache Zugabe von Wasser gespalten werden, wobei sich die freie primäre Aminogruppe zurückbildet.

Durch Umsetzung eines Teils der primäre Aminogruppen mit Dicarbonsäuren lassen sich auch diese Produkte durch Kettenverlängerung elastifizieren.

(B) Zur Herstellung der aminomethylierten Phenole (B) sind prinzipiell alle sekundären aliphatischen Amine (c) geeignet. Bevorzugt werden solche Amine eingesetzt, die eine gewisse Flüchtigkeit besitzen, z.B. solche mit einem Siedepunkt von unter 250 °C bei einem Druck von 1000 mbar. Beispiele geeigneter Amine sind Dialkylamine, wie Dimethylamin, Diethylamin, Methylethanolamin, Ethylethanolamin, Morpholin, Piperidin. Besonders bevorzugt sind Dialkylamine, deren Alkylgruppen zusammen 5 bis 15 Kohlenstoffatome beinhalten, wie z.B. Ethylpropylamin, Dipropylamin, Diisopropylamin, Dibutylamin, Diisobutylamin, Dipentylamin, Dihexylamin, Dicyclohexylamin sowie Gemische dieser Dialkylamine.

Auch primäre Amine, wie z.B. Methylamin, Ethylamin, Propylamin oder Butylamin können in untergeordneten Mengen mitverwendet werden.

Als Polyphenole (a) kommen alle mehrkernigen Phenolen mit mindestens 2 Phenolkernen in Betracht, die im Molekül mindestens zwei zu verschiedenen Hydroxylgruppen orthoständige Wasserstoffatome tragen. Beispiele solcher mehrkernigen Phenole sind solche der allgemeinen Formel (II)

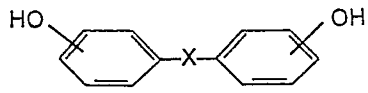

(II),

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, SO, –O– oder $-CH_2-NR-CH_2-$ (mit R = Alkylrest mit 1 bis 16 C-Atomen) ist; bevorzugtes Polyphenol gemäß Formel II ist Bisphenol A. Weitere geeignete Polyphenole sind niedermolekulare Umsetzungsprodukte aus Phenolen und Formaldehyd, sogenannte Novolacke. Die benötigten Polyphenole können auch «in situ» aus Monophenolen und Formaldehyd erzeugt werden, wenn während der Aminomethylierung größere als dem eingesetzten Amin äquivalente Mengen an Formaldehyd eingesetzt werden.

Auch Umsetzungsprodukte aus Polyphenolen und Polyepoxiden können eingesetzt werden, wobei ein Überschuß an phenolischen OH-Gruppen gegenüber Epoxidgruppen eingesetzt werden muß. Ein solches kettenverlängertes Phenol läßt sich z.B. herstellen aus 2 Mol Bisphenol A und einem Mol des Diglycidylethers aus Bisphenol A und Epichlorhydrin.

Der Einbau der Amine in die Polyphenole erfolgt über eine Methylenbrücke. Dazu wird Formaldehyd oder eine Formaldehyd-liefernde Verbindung (b) wie z.B. Paraformaldehyd benötigt. Diese Umsetzung der Phenole mit Aldehyd und sekundärem Amin wird Aminomethylierung oder «Mannich»-Reaktion genannt. Die Reaktion kann bei Raumtemperatur, zweckmäßigerweise jedoch bei erhöhter Temperatur bis etwa 150 °C durchgeführt werden. Lösemittel sind dabei nicht nötig. Auch ist es nicht nötig, das bei der Reaktion gebildete Wasser zu entfernen. Das Wasser kann jedoch problemlos unter vermindertem Druck oder mit einem organischen Lösungsmittel als Schleppmittel entfernt werden.

Wie schon erwähnt, kann die Mannich-Reaktion ohne Lösemittel durchgeführt werden, sofern die Reaktionsprodukte bei der Umsetzungstemperatur flüssig sind. Es können aber auch übliche Lösemittel wie Alkohole, Ketone, Ester, Ether oder Kohlenwasserstoffe eingesetzt werden. Beispiele geeigneter Lösemittel sind Butanol, Methylisobutylketon, Toluol, Ethylglykolacetat.

Zur Herstellung der erfindungsgemäßen Bindemittel werden 50 bis 90, vorzugsweise 60 bis 80 Gew.-% der Komponente (A) mit 10 bis 50, vorzugsweise 20 bis 40 Gew.-% der Komponente (B) entweder in Substanz oder zweckmäßigerweise in mit organischen Lösemitteln verdünnter Form gemischt. Häufig ist es vorteilhaft, die Komponenten durch Ankondensation verträglicher zu machen. Dazu genügt es, die Mischung der Komponenten einige Zeit zu erwärmen, z.B. auf 35 bis 110, vorzugsweise 50 bis 100 °C. Das Fortschreiten

der Ankondensation, bei der im wesentlichen freie Methylolgruppen oder Aminomethylengruppen der Komponente (B) mit den primären bzw. sekundären Aminogruppen der Komponente (A) reagieren, kann durch Messen der Viskositätserhöhung verfolgt werden. Ankondensierte Bindemittel benötigen häufig geringere Mengen an Neutralisationsmittel und liefern stabilere Dispersionen als das Gemisch der Komponenten (A) und (B).

Zur Herstellung einer wäßrigen Dispersion wird die Bindemittelzusammensetzung (A) + (B) mit einer Säure, wie z. B. Ameisensäure, Essigsäure oder Milchsäure, versetzt und anschließend auf Verarbeitungskonzentration verdünnt. Man kann jedoch auch die Bindemittelzusammensetzung langsam unter Rühren in angesäuertes Wasser einfließen lassen. Zur Herstellung von Elektrotauchbädern können dem erfindungsgemäßen Bindemittel noch andere Bindemittel, Pigmente sowie weitere bei der Elektrotauchlackierung übliche Hilfs- und Zusatzstoffe wie Lösemittel, Dispergierhilfsmittel, Entschäumer oder auch weitere Harzkomponenten zugesetzt werden. Die Elektrotauchbäder besitzen üblicherweise einen Feststoffgehalt von 5 bis 30 Gew.-%. Die Abscheidung erfolgt üblicherweise bei Temperaturen von 15 bis 40 °C, während einer Zeit von 1 bis 5 Minuten bei einer angelegten Spannung von 50 bis 500 V. Der zu beschichtende elektrisch leitende Körper, beispielsweise ein Gegenstand aus Kupfer, Aluminium oder Stahlblech, das gegebenenfalls chemisch vorbehandelt, z. B. phosphatiert sein kann, wird dabei als Kathode geschaltet. Der abgeschiedene Film wird bei Temperaturen von 120 bis 200, vorzugsweise 130 bis 180 °C innerhalb von 5 bis 45, vorzugsweise 10 bis 30 Minuten gehärtet.

Die folgenden Beispiele sollen die Erfindung näher erläutern. Die in den Beispielen genannten Teile und Prozente sind, soweit nicht anders angegeben, Gewichtsteile und Gewichtsprozente.

Herstellung der Komponente (A):

Komponente (A1):

640 Teile eines Diglycidylethers auf Basis von Bisphenol A und Epichlorhydrin mit einem Epoxid-Äquivalentgewicht von 485 und 160 Teile eines solchen mit einem Epoxid-Äquivalentgewicht von 189 werden bei 100 °C gemischt. In einem weiteren Gefäß werden 452 Teile Hexamethylendiamin vorgelegt, auf 100 °C erhitzt und 720 Teile der obigen heißen Epoxidharzmischung innerhalb einer Stunde zugegeben, wobei leicht gekühlt werden muß, um die Temperatur bei 100 °C zu halten. Nach weiteren 30 Minuten wird unter Temperaturerhöhung und vermindertem Druck das überschüssige Hexamethylendiamin abgezogen, wobei zum Schluß eine Temperatur von 205 °C und ein Druck von 30 mbar erreicht wird. Anschließend werden 57,6 Teile Stearinsäure, 172,7 Teile Dimerfettsäure und 115 Teile Xylol zugesetzt. Dann wird innerhalb von 90 Minuten bei 175–180 °C das gebildete Wasser azeotrop abdestilliert. Anschließend werden 58 Teile Butylglykol und 322 Teile Isobutanol zugefügt. Das Produkt hat einen Feststoffgehalt von 70% und eine Viskosität, gemessen bei 75 °C mit einem Platten-Kegel-Viskosimeter von 2240 mPas.

Komponente (A2):

Gemäß US-PS 4 369 290 Beispiel IX (i) wird ein Addukt aus Ethylendiamin und Epoxidharz hergestellt und mit Hexadecenoxid plastifiziert.

Komponente (A3):

Es wird wie bei der Herstellung der Komponente (A1) Verfahren, statt Hexamethylendiamin wird jedoch dieselbe Menge an 2-Methylpentamethylendiamin eingesetzt. Das Produkt wird wie dort angegeben auf einen Festgehalt von 70% eingestellt. Die Viskosität beträgt, gemessen bei 75 °C mit einem Platten-Kegel-Viskosimeter, 1600 mPas.

Herstellung der Komponente (B):

Komponente (B1):

228 Teile Bisphenol A (2 Äquivalente), 258 Teile Di-n-butylamin (2 Mol) und 69,3 Teile (entsprechend 2,2 Mol Formaldehyd) Paraformaldehyd werden 2 Stunden auf 80 °C erhitzt. Anschließend wird mit 89 Teilen Isobutanol auf ein Feststoffgehalt von 80% verdünnt.

Komponente (B2):

114 Teile Bisphenol A (1 Äquivalent), 103,2 Teile Dibutylamin (0,8 Mol) und 34,65 Teile Paraformaldehyd (entsprechend 1,1 Mol Formaldehyd) werden 2 Stunden auf 80 °C erhitzt. Anschließend wird bei 80 °C und einem Druck von 25 mbar das gebildete Wasser abgezogen.

Komponente (B3):

Es wird wie bei der Herstellung der Komponente (B2) verfahren, es werden jedoch 116,1 Teile Dibutylamin (0,9 Mol) eingesetzt.

Komponente (B4):

150 Teile eines Polytetrahydrofuran-α-ω-Diamin (MG ca. 750), 114,4 Teile 4,4-Bis-p-hydroxyphenylvaleriansäure und 16,4 Teile eines aromatenreichen Kohlenwasserstoffgemisches mit einem Siedepunkt von ca. 150 °C (z. B. ®Solvesso 150) werden 5 Stunden auf 190 °C erhitzt, wobei das gebildete Wasser azeotrop abdestilliert wird. Anschließend werden 15,4 Teile Ethylenglykolmonoethylether, 98 Teile Dibutylamin, 25,2 Teile Paraformaldehyd und 111,8 Teile Isobutanol zugegeben und 3 Stunden auf 80 °C erhitzt. Das erhaltene Produkt hat einen Feststoffgehalt von 70%.

Komponente (B5):

152 Teile Bisphenol A, 63 Teile eines Diglycidylethers von Bisphenol A mit einem Epoxid-Äquivalentgewicht von 189 und 0,1 Teile Tributylphosphin werden 1 Stunde auf 160 °C erhitzt. Nach dieser Zeit läßt sich kein Epoxid mehr nachweisen und es ist ein kettenverlängertes Diphenol entstanden (1 Äquivalent). Dazu werden 53,8 Teile Isopropanol, 129 Teile Dibutylamin (1 Mol), 31,5 Teile Paraformaldehyd (entsprechend 1 Mol Formaldehyd) und 17,6 Teile Isobutanol gegeben und

2 Stunden auf 80 °C erhitzt. Das Produkt hat einen Festgehalt von 80%.

Komponente (B6):
228 Teile Bisphenol A, 63 Teile Paraformaldehyd, 129 Teile Dibutylamin und 36,5 Teile n-Butylamin werden 2 Stunden auf 80 °C erhitzt und danach mit 52,5 Teilen Isobutanol und 52,5 Teilen Isopropanol verdünnt. Das so erhaltene Produkt hat einen Festgehalt von 80%.

Komponente (B7):
Es wird wie bei der Herstellung der Komponente (B5) verfahren, statt 129 Teile Dibutylamin werden jedoch 101 Teile Di-n-propylamin eingesetzt.

Beispiele 1 bis 8
Die folgenden Beispiele zeigen die Anwendung der erfindungsgemäßen Bindemittelzusammensetzungen in kathodisch abscheidbaren Elektrotauchlacken:
Es wird zunächst eine Pigmentpaste hergestellt, indem in einer Kugelmühle

110 Teile der Komponente (A1)
36 Teile Ethylenglykolmonobutylether
3 Teile Essigsäure
145 Teile Rutil
35 Teile Aluminiumsilikat
10 Teile Bleisilikat
2,5 Teile Ruß
170 Teile Wasser

bis zu einer Kornfeinheit von $< 7\ \mu m$ vermahlen werden.

Die jeweiligen Komponenten (A) und (B) werden in solchen Mengen gemischt, daß die resultierende Mischung 137 Teile Feststoff im Mischungsverhältnis 70% Komponente (A) und 30% Komponente (B) enthält. Es wird die angegebene Menge Essigsäure zugesetzt und mit 300 Teilen entionisiertem Wasser unter Rühren eine Dispersion hergestellt. Dann werden 139 Teile der oben angegebenen Pigmentpaste zugesetzt und mit entionisiertem Wasser auf 1000 Teile aufgefüllt. Die so hergestellten Elektrotauchbäder werden 2 Tage bei 27 °C gerührt. Dann wird bei der angegebenen Spannung während 2 Minuten ein als Kathode geschaltetes Blech beschichtet und anschließend während 20 Minuten bei 140 °C eingebrannt. Die folgende Tabelle zeigt die Ergebnisse:

| Beispiel | Komponenten | Teile Essigsäure auf 100 Teile fest | Bad pH | Abscheidespannung | Schichtdicke | Lösemittel-* beständigkeit | Umgriff n. Ford | ASTM-Salzsprühtest 500 Stunden** |
|---|---|---|---|---|---|---|---|---|
| 1 | $A_1$, $B_2$ | 3,0 | 8,09 | 280 V | 20 µm | 1 | 21 cm | 0,1 |
| 2 | $A_1$, $B_3$ | 3,0 | 8,2 | 250 V | 20 µm | 1 | 23 cm | 0,2 |
| 3 | $A_1$, $B_4$ | 3,2 | 8,6 | 250 V | 32 µm | 1 | 22 cm | 0,25 |
| 4 | $A_1$, $B_5$ | 3,0 | 8,45 | 270 V | 18 µm | 2 | 24,5 cm | 0,2 |
| 5 | $A_1$, $B_6$ | 3,0 | 8,24 | 310 V | 19 µm | 1 | 25 cm | 0,1 |
| 6 | $A_1$, $B_7$ | 3,2 | 8,05 | 270 V | 18 µm | 1 | 20 cm | 0,2 |
| 7 | $A_2$, $B_3$ | 3,2 | 7,91 | 150 V | 15 µm | 1 | 17 cm | 0,4 |
| 8 | $A_3$, $B_1$ | 3,0 | 7,95 | 230 V | 19 µm | 1 | 20 cm | 0,3 |

* 50maliges Hin- und Herreiben mit einem acetongetränkten Wattebausch.
Note 1 unangreifbar, Note 2 sehr schwach angegriffen.
** Unterwanderung am Schnitt in mm

Vergleichsbeispiel
Aus 100 Teilen der Komponente (A2) und 13,1 Teilen 2,4,6-Tris-dimethylamino-phenol wurde das Beispiel IXii der US-PS 4 369 290 nachgearbeitet. Der pH-Wert betrug 6,0, die maximal erreichbare Abscheidespannung war 25 V. Der abgeschiedene und 20 Minuten bei 180 °C eingebrannte Film war löchrig und von sehr geringer Lösemittelbeständigkeit. Bereits nach fünfmaligem Hin- und Herreiben mit einem acetongetränkten Wattebausch war der Film bis auf das Blech durchgerieben. Der Umgriff nach Ford betrug weniger als 5 cm. In einem zweiten Versuch wurde die zur Neutralisation dienende Milchsäuremenge halbiert. Es gelang damit jedoch nicht, das Bindemittel in Wasser zu dispergieren.

**Patentansprüche für die Vertragsstaaten: BE CH DE FR GB IT LI NL SE**

1. Bindemittel für die kathodische Elektrotauchlackierung, das durch Zusatz von Säure wasserverdünnbar ist und nicht-tertiäre basische Aminogruppen neben phenolischen Mannichbasen enthält, bestehend aus einem Gemisch oder Vorkondensat aus

(A) 50 bis 90 Gewichtsprozent eines Polymerisations-, Polykondensations- oder Polyadditionsprodukts mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten und

(B) 10 bis 50 Gewichtsprozent einer oder mehrerer phenolischer Mannichbasen, hergestellt aus

a) einem oder mehreren mehrkernigen Polyphenolen,

b) Formaldehyd oder einer Formaldehyd-liefernden Verbindung und

c) einem oder mehreren sekundären aliphatischen Aminen,

wobei die Summe der unter (A) und (B) genannten Prozentzahlen 100 ist, dadurch gekennzeichnet, daß zur Herstellung der Komponente (B) pro Äquivalent phenolischer Hydroxylgruppen des Polyphenols (a) nicht mehr als ein Äquivalent sekundäres Amin (c) und nicht mehr als 2 Äquivalente Formaldehyd (b) eingesetzt werden.

2. Bindemittel nach Anspruch 1, dadurch gekennzeichnet, daß zur Herstellung der Komponente (B) pro Äquivalent phenolischer Hydroxylgruppen des Polyphenols (a) 0,5 bis 1 Äquivalente sekundäres Amin (c) und 0,5 bis 2 Äquivalente Formaldehyd (b) eingesetzt werden.

3. Bindemittel nach Anspruch 1 oder 2, dadurch gekennzeichnet, daß als Komponente (A) ein Umsetzungsprodukt aus einem aliphatischen Diamin und einem aromatischen Epoxidharz verwendet wird.

4. Bindemittel nach Anspruch 3, dadurch gekennzeichnet, daß das Umsetzungsprodukt aus einem aliphatischen Diamin und einem aromatischen Epoxidharz durch weitere Umsetzung mit Mono- und/oder Dicarbonsäuren modifiziert wurde.

5. Bindemittel nach einem der vorhergehenden Ansprüche, dadurch gekennzeichnet, daß zur Herstellung der Komponente (B) als mehrkerniges Polyphenol (a) ein Umsetzungsprodukt aus Bisphenol A und einem stöchiometrischen Unterschuß eines Diglycidylethers von Bisphenol A verwendet wird.

6. Bindemittel nach Anspruch 5, dadurch gekennzeichnet, daß zur Herstellung der Komponente (B) als mehrkerniges Polyphenol (a) ein Umsetzungsprodukt aus Bisphenol A und einem Diglycidylether von Bisphenol A verwendet wird mit der Maßgabe, daß pro Äquivalent phenolischer Hydroxylgruppen des Bisphenol A bis zu 0,8 Äquivalente Epoxidgruppen eines Diglycidylethers von Bisphenol A eingesetzt werden.

7. Bindemittel nach einem der vorhergehenden Ansprüche, dadurch gekennzeichnet, daß zur Herstellung der Komponente (B) als sekundäres aliphatisches Amin mindestens ein Dialkylamin verwendet wird, dessen Alkylgruppen zusammen 5 bis 15 Kohlenstoffatome enthalten.

8. Bindemittel nach einem der vorhergehenden Ansprüche, dadurch gekennzeichnet, daß zur Herstellung der Komponente (B) als sekundäres aliphatisches Amin Di-n-butylamin verwendet wird.

9. Bindemittel nach einem der vorhergehenden Ansprüche, dadurch gekennzeichnet, daß die Komponenten (A) und (B) bei erhöhter Temperatur partiell miteinander zur Reaktion gebracht werden.

10. Bindemittel nach Anspruch 9, dadurch gekennzeichnet, daß die Komponenten (A) und (B) bei 35 bis 110 °C partiell miteinander zur Reaktion gebracht werden.

11. Verfahren zur Herstellung eines Bindemittels, das nicht-tertiäre basische Aminogruppen neben phenolischen Mannichbasen enthält und durch Zusatz von Säure wasserverdünnbar ist, dadurch gekennzeichnet, daß 50 bis 90 Gew.% eines Polymerisations-, Polykondensations- oder Polyadditionsproduktes mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten mit 10 bis 50 Gew.% einer oder mehrerer phenolischer Mannichbasen vermischt und gegebenenfalls bei 35 bis 110 °C partiell miteinander zur Reaktion gebracht werden, mit der Maßgabe, daß die Mannichbasen aus

a) einem oder mehreren mehrkernigen Polyphenolen,

b) Formaldehyd oder einer Formaldehyd-liefernden Verbindung und

c) einem oder mehreren sekundären aliphatischen Aminen,

hergestellt werden, wobei pro Äquivalent phenolischer Hydroxylgruppen des Polyphenols (a) nicht mehr als etwa ein Äquivalent sekundäres Amin (c) und nicht mehr als zwei Äquivalente Formaldehyd (b) eingesetzt werden.

12. Verfahren zur Herstellung eines Überzugs auf einem elektrisch leitenden Gegenstand durch kathodische Elektrotauchlackierung, dadurch gekennzeichnet, daß man den als Kathode geschalteten elektrisch leitenden Gegenstand in ein wäßriges Elektrotauchbad mit einem Feststoffgehalt von 5 bis 30 Gew.%, das ein durch Zusatz von Säure wasserverdünnbar gemachtes Bindemittel nach einem der Ansprüche 1 bis 10, gegebenenfalls in Kombination mit anderen Bindemitteln, Pigmenten und anderen bei der Elektrotauchlackierung üblichen Hilfs- und Zusatzstoffen, enthält, eintaucht, bei Temperaturen von 15 bis 40 °C innerhalb von etwa 1 bis 5 Minuten bei einer Spannung von 50 bis 500 V auf dem elektrisch leitenden Gegenstand einen Überzug abscheidet und den Überzug bei Temperaturen von 120 bis 200 °C härtet.

13. Verwendung des Bindemittels nach einem der Ansprüche 1 bis 10 für die kathodische Elektrotauchlackierung elektrisch leitender Gegenstände, wobei das Bindemittel, gegebenenfalls mit anderen Bindemitteln, Pigmenten und anderen bei der Elektrotauchlackierung üblichen Hilfs- und Zusatzstoffen kombiniert, durch Zusatz einer Säure wasserverdünnbar gemacht wird.

**Patentansprüche für den Vertragsstaat: AT**

1. Verfahren zur Herstellung von Bindemitteln für die kathodische Elektrotauchlackierung, die durch Zusatz von Säure wasserverdünnbar sind und nicht-tertiäre basische Aminogruppen neben phenolischen Mannichbasen enthalten, bestehend aus einem Gemisch oder Vorkondensat aus

(A) 50 bis 90 Gewichtsprozent eines Polymerisations-, Polykondensations- oder Polyadditionsprodukts mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten und

(B) 10 bis 50 Gewichtsprozent einer oder mehrerer phenolischer Mannichbasen, hergestellt aus

a) einem oder mehreren mehrkernigen Polyphenolen,

b) Formaldehyd oder einer Formaldehydliefernden Verbindung und

c) einem oder mehreren sekundären aliphatischen Aminen,

wobei die Summe der unter (A) und (B) genannten Prozentzahlen 100 ist, dadurch gekennzeichnet, daß zur Herstellung der Komponente (B) pro Äquivalent phenolischer Hydroxylgruppen des Polyphenols (a) nicht mehr als ein Äquivalent sekundäres Amin (c) und nicht mehr als 2 Äquivalente Formaldehyd (b) eingesetzt werden.

2. Verfahren nach Anspruch 1, dadurch gekennzeichnet, daß zur Herstellung der Komponente (B) pro Äquivalent phenolischer Hydroxylgruppen des Polyphenols (a) 0,5 bis 1 Äquivalente sekundäres Amin (c) und 0,5 bis 2 Äquivalente Formaldehyd (b) eingesetzt werden.

3. Verfahren nach Anspruch 1 oder 2, dadurch gekennzeichnet, daß als Komponente (A) ein Umsetzungsprodukt aus einem aliphatischen Diamin und einem aromatischen Epoxidharz verwendet wird.

4. Verfahren nach Anspruch 3, dadurch gekennzeichnet, daß das Umsetzungsprodukt aus einem aliphatischen Diamin und einem aromatischen Epoxidharz durch weitere Umsetzung mit Mono- und/oder Dicarbonsäuren modifiziert wurde.

5. Verfahren nach einem der vorhergehenden Ansprüche, dadurch gekennzeichnet, daß zur Herstellung der Komponente (B) als mehrkerniges Polyphenol (a) ein Umsetzungsprodukt aus Bisphenol A und einem stöchiometrischen Unterschuß eines Diglycidylethers von Bisphenol A verwendet wird.

6. Verfahren nach Anspruch 5, dadurch gekennzeichnet, daß zur Herstellung der Komponente (B) als mehrkerniges Polyphenol (a) ein Umsetzungsprodukt aus Bisphenol A und einem Diglycidylether von Bisphenol A verwendet wird mit der Maßgabe, daß pro Äquivalent phenolischer Hydroxylgruppen des Bisphenol A bis zu 0,8 Äquivalente Epoxidgruppen eines Diglycidylethers von Bisphenol A eingesetzt werden.

7. Verfahren nach einem der vorhergehenden Ansprüche, dadurch gekennzeichnet, daß zur Herstellung der Komponente (B) als sekundäres aliphatisches Amin mindestens ein Dialkylamin verwendet wird, dessen Alkylgruppen zusammen 5 bis 15 Kohlenstoffatome enthalten.

8. Verfahren nach einem der vorhergehenden Ansprüche, dadurch gekennzeichnet, daß zur Herstellung der Komponente (B) als sekundäres aliphatisches Amin Di-n-butylamin verwendet wird.

9. Verfahren nach einem der vorhergehenden Ansprüche, dadurch gekennzeichnet, daß die Komponenten (A) und (B) bei erhöhter Temperatur partiell miteinander zur Reaktion gebracht werden.

10. Verfahren nach Anspruch 9, dadurch gekennzeichnet, daß die Komponenten (A) und (B) bei 35 bis 110 °C partiell miteinander zur Reaktion gebracht werden.

11. Verfahren zur Herstellung eines Bindemittels das nicht-tertiäre basische Aminogruppen neben phenolischen Mannichbasen enthält und durch Zusatz von Säure wasserverdünnbar ist, dadurch gekennzeichnet, daß 50 bis 90 Gew.% eines Polymerisations-, Polykondensations- oder Polyadditionsproduktes mit einem mittleren Molekulargewicht von 800 bis 8000 und einem Gehalt an basischen, primären und/oder sekundären Aminogruppen von 0,8 bis 8 Äquivalenten pro 1000 Molekulargewichtseinheiten mit 10 bis 50 Gew.% einer oder mehrerer phenolischer Mannichbasen vermischt und gegebenenfalls bei 35 bis 110 °C partiell miteinander zur Reaktion gebracht werden, mit der Maßgabe, daß die Mannichbasen aus

a) einem oder mehreren mehrkernigen Polyphenolen,

b) Formaldehyd oder einer Formaldehyd-liefernden Verbindung und

c) einem oder mehreren sekundären aliphatischen Aminen,

hergestellt werden, wobei pro Äquivalent phenolischer Hydroxylgruppen des Polyphenols (a) nicht mehr als etwa ein Äquivalent sekundäres Amin (c) und nicht mehr als zwei Äquivalente Formaldehyd (b) eingesetzt werden.

12. Verfahren zur Herstellung eines Überzugs auf einem elektrisch leitenden Gegenstand durch kathodische Elektrotauchlackierung, dadurch gekennzeichnet, daß man den als Kathode geschalteten elektrisch leitenden Gegenstand in ein wäßriges Elektrotauchbad mit einem Feststoffgehalt von 5 bis 30 Gew.%, das ein durch Zusatz von Säure wasserverdünnbar gemachtes Bindemittel nach einem der Ansprüche 1 bis 10, gegebenenfalls in Kombination mit anderen Bindemitteln, Pigmenten und anderen bei der Elektrotauchlackierung üblichen Hilfs- und Zusatzstoffen, enthält, eintaucht, bei Temperaturen von 15 bis 40 °C innerhalb von etwa 1 bis 5 Minuten bei einer Spannung von 50 bis 500 V auf dem elektrisch leitenden Gegenstand einen Überzug abscheidet und den Überzug bei Temperaturen von 120 bis 200 °C härtet.

**Claims for the Contracting States: BE, CH, DE, FR, GB, IT, LI, NL, SE**

1. A binder for cathodic electrocoating which is rendered water-dilutable by the addition of an acid, contains non-tertiary basic amino groups in addition to phenolic Mannich bases and consists of a mixture or precondensate of

(A) 50 to 90 percent by weight of a polymer, polycondensate or polyadduct having a mean molecular weight of 800 to 8,000 and a content of basic, primary and/or secondary amino groups of 0.8 to 8 equivalents per 1,000 molecular weight units and

(B) 10 to 50 percent by weight of one or more phenolic Mannich bases, prepared from

a) one or more polynuclear polyphenols,

b) formaldehyde or a formaldehyde donor and

c) one or more secondary aliphatic amines,

the sum of the percentages stated under (A) and (B) being 100, wherein not more than one equivalent of a secondary amine (c) and not more than 2 equivalents of formaldehyde (b) are employed per equivalent of phenolic hydroxyl groups of the polyphenol (a) for the preparation of component (B).

2. A binder as claimed in claim 1, wherein 0.5 to 1 equivalent of a secondary amine (c) and 0.5 to 2 equivalents of formaldehyde (b) are employed per equivalent of phenolic hydroxyl groups of the polyphenol (a) for the preparation of component (B).

3. A binder as claimed in claim 1 or 2, wherein component (A) used is a reaction product of an aliphatic diamine and an aromatic epoxy resin.

4. A binder as claimed in claim 3, wherein the reaction product of an aliphatic diamine and an aromatic epoxy resin has been modified by further reaction with mono- and/or dicarboxylic acids.

5. A binder as claimed in any of the preceding claims, wherein a reaction product of bisphenol A and less than the stoichiometric amount of a diglycidyl ether of bisphenol A is used as the polynuclear polyphenol (a) for the preparation of component (B).

6. A binder as claimed in claim 5, wherein a reaction product of bisphenol A and a diglycidyl ether of bisphenol A is used as the polynuclear polyphenol (a) for the preparation of component (B), with the proviso that up to 0.8 equivalent of epoxide groups of a diglycidyl ether of bisphenol A is employed per equivalent of phenolic hydroxyl groups of the bisphenol A.

7. A binder as claimed in any of the preceding claims, wherein at least one dialkylamine whose alkyl groups together contain 5 to 15 carbon atoms is used as the secondary aliphatic amine for the preparation of component (B).

8. A binder as claimed in any of the preceding claims, wherein di-n-butylamine is used as the secondary aliphatic amine for the preparation of component (B).

9. A binder as claimed in one of the preceding claims, wherein the components (A) and (B) are partially reacted with one another at elevated temperature.

10. A binder as claimed in claim 9, wherein components (A) and (B) are partially reacted with one another at 35 to 110 °C.

11. A process for the preparation of a binder which contains non-tertiary basic amino groups in addition to phenolic Mannich bases and is rendered water-dilutable by the addition of an acid, wherein 50 to 90% by weight of a polymer, polycondensate or polyadduct having a mean molecular weight of 800 to 8,000 and a content of basic, primary and/or secondary amino groups of 0.8 to 8 equivalents per 1,000 molecular weight units is mixed with 10 to 50% by weight of one or more phenolic Mannich bases and, if required, the components are partially reacted with one another at 35 to 110 °C, with the proviso that the Mannich bases are prepared from

a) one or more polynuclear polyphenols,

b) formaldehyde or a formaldehyde donor and

c) one or more secondary aliphatic amines,

not more than about one equivalent of a secondary amine (c) and not more than two equivalents of formaldehyde (b) being employed per equivalent of phenolic hydroxyl groups of the polyphenol (a).

12. A process for the production of a coating on an electrically conductive article by cathodic electrocoating, wherein the electrically conductive article, connected as the cathode, is dipped into an aqueous electrocoating bath which has a solids content of 5 to 30% by weight and contains a binder as claimed in any of claims 1 to 10, which is rendered water-dilutable by the addition of an acid, if necessary in combination with other binders, pigments and other assistants and additives conventionally used in electrocoating, a coating is deposited on the electrically conductive article at temperatures of 15 to 40 °C in the course of about 1 to 5 minutes at a voltage of 50 to 500 V, and the coating is cured at temperatures of 120 to 200 °C.

13. Use of a binder as claimed in any of claims 1 to 10 for the cathodic electrocoating of electrically conductive articles, wherein the binder, if necessary in combination with other binders, pigments and other assistants and additives conventionally used in electrocoating, is rendered water-dilutable by the addition of an acid.

**Claims for the Contracting State: AT**

1. A process for the preparation of a binder for cathodic electrocoating which is rendered water-dilutable by the addition of an acid, contains non-tertiary basic amino groups in addition to phenolic Mannich bases and consists of a mixture or precondensate of

(A) 50 to 90 percent by weight of a polymer, polycondensate or polyadduct having a mean molecular weight of 800 to 8,000 and a content of basic, primary and/or secondary amino groups of 0.8 to 8 equivalents per 1,000 molecular weight units and

(B) 10 to 50 percent by weight of one or more phenolic Mannich bases, prepared from

a) one or more polynuclear polyphenols,

b) formaldehyde or a formaldehyde donor and

c) one or more secondary aliphatic amines,

the sum of the percentages stated under (A) and (B) being 100, wherein not more than one equivalent of a secondary amine (c) and not more than 2 equivalents of formaldehyde (b) are employed per equivalent of phenolic hydroxyl groups of the polyphenol (a) for the preparation of component (B).

2. A process as claimed in claim 1, wherein 0.5 to 1 equivalent of a secondary amine (c) and 0.5 to 2 equivalents of formaldehyde (b) are employed per equivalent of phenolic hydroxyl groups of the polyphenol (a) for the preparation of component (B).

3. A process as claimed in claim 1 or 2, wherein component (A) used is a reaction product of an aliphatic diamine and an aromatic epoxy resin.

4. A process as claimed in claim 3, wherein the reaction product of an aliphatic diamine and an aromatic epoxy resin has been modified by further reaction with mono- and/or dicarboxylic acids.

5. A process as claimed in any of the preceding claims, wherein a reaction product of bisphenol A and less than the stoichiometric amount of a diglycidyl ether of bisphenol A is used as the polynuclear polyphenol (a) for the preparation of component (B).

6. A process as claimed in claim 5, wherein a reaction product of bisphenol A and diglycidyl ether of bisphenol A is used as the polynuclear polyphenol (a) for the preparation of component (B), with the proviso that up to 0.8 equivalent of epoxide groups of a diglycidyl ether of bisphenol A is employed per equivalent of phenolic hydroxyl groups of the bisphenol A.

7. A process as claimed in any of the preceding claims, wherein at least one dialkylamine whose alkyl groups together contain 5 to 15 carbon atoms is used as the secondary aliphatic amine for the preparation of component (B).

8. A process as claimed in any of the preceding claims, wherein di-n-butylamine is used as the secondary aliphatic amine for the preparation of component (B).

9. A process as claimed in any of the preceding claims, wherein the components (A) and (B) are partially reacted with one another at elevated temperature.

10. A process as claimed in claim 9, wherein components (A) and (B) are partially reacted with one another at 35 to 110 °C.

11. A process for the preparation of a binder which contains non-tertiary basic amino groups in addition to phenolic Mannich bases and is rendered water-dilutable by the addition of an acid, wherein 50 to 90% by weight of a polymer, polycondensate or polyadduct having a mean molecular weight of 800 to 8,000 and a content of basic, primary and/or secondary amino groups of 0.8 to 8 equivalents per 1,000 molecular weight units is mixed with 10 to 50% by weight of one or more phenolic Mannich bases and, if required, the components are partially reacted with one another at 35 to 110 °C, with the proviso that the Mannich bases are prepared from

a) one or more polynuclear polyphenols,

b) formaldehyde or a formaldehyde donor and

c) one or more secondary aliphatic amines,

not more than about one equivalent of a secondary amine (c) and not more than two equivalents of formaldehyde (b) being employed per equivalent of phenolic hydroxyl groups of the polyphenol (a).

12. A process for the production of a coating on an electrically conductive article by cathodic electrocoating, wherein the electrically conductive article, connected as the cathode, is dipped into an aqueous electrocoating bath which has a solids content of 5 to 30% by weight and contains a binder as claimed in any of claims 1 to 10, which is rendered water-dilutable by the addition of an acid, if necessary in combination with other binders, pigments and other assistants and additives conventionally used in electrocoating, a coating is deposited on the electrically conductive article at temperatures of 15 to 40 °C in the course of about 1 to 5 minutes at a voltage of 50 to 500 V, and the coating is cured at temperatures of 120 to 200 °C.

**Revendications pour les Etats Contractants: BE, CH, DE, FR, GB, IT, LI, NL, SE**

1. Liant pour l'électrodéposition cathodique par trempage électrophorétique, qui est diluable à l'eau par addition d'acide et qui contient des groupes amino basiques non-tertiaires ainsi que des bases de Mannich phénoliques, ce liant consistant en un mélange ou un précondensat de

(A) 50 à 90% en poids d'un produit de polymérisation, polycondensation ou polyaddition ayant un poids moléculaire moyen de 800 à 8000 et une teneur en groupes amino basiques, primaires et/ou secondaires, de 0,8 à 8 équivalents par 1000 unités de poids moléculaire et

(B) 10 à 50% en poids d'une ou plusieurs bases de Mannich phénoliques, préparées à partir

a) d'un ou plusieurs polyphénols polynucléaires,

b) de formaldéhyde ou d'un composé fournissant du formaldéhyde et

c) d'une ou plusieurs amines aliphatiques secondaires

la somme des pour-cent indiqués en (A) et (B) étant 100, caractérisé en ce que, pour la préparation du composant (B), on ne met en œuvre pas plus d'un équivalent de l'amine secondaire (c) et pas plus de 2 équivalents de formaldéhyde (b) par équivalent des groupes hydroxyle phénoliques du polyphénol (a).

2. Liant suivant la revendication 1, caractérisé en ce que, pour la préparation du composant (B), on met en œuvre 0,5 à 1 équivalent de l'amine secondaire (c) et 0,5 à 2 équivalents de formaldéhyde (b) par équivalent des groupes hydroxyle phénoliques du polyphénol (a).

3. Liant suivant la revendication 1 ou 2, caractérisé en ce que l'on utilise, comme composant (A), un produit de réaction d'une diamine aliphatique et d'une résine époxy aromatique.

4. Liant suivant la revendication 3, caractérisé en ce que le produit de réaction d'une diamine aliphatique et d'une résine époxy aromatique est modifié par une réaction complémentaire avec des acides mono- et/ou dicarboxyliques.

5. Liant suivant l'une quelconque des revendications précédentes, caractérisé en ce que, pour la préparation du composant (B), on utilise, comme polyphénol polynucléaire (a), un produit de réaction du bisphénol A et d'une quantité inférieure à la quantité stoechiométrique d'un éther diglycidylique de bisphénol A.

6. Liant suivant la revendication 5, caractérisé en ce que, pour la préparation du composant (B), on utilise, comme polyphénol polynucléaire (a), un produit de réaction du bisphénol A et d'un éther

diglycidylique du bisphénol A, avec cette condition que l'on met en œuvre jusqu'à 0,8 équivalent de groupes époxy d'un éther diglycidylique de bisphénol A par équivalent de groupes hydroxyle phénoliques du bisphénol A.

7. Liant suivant l'une quelconque des revendications précédentes, caractérisé en ce que, pour la préparation du composant (B), on utilise, comme amine aliphatique secondaire, au moins une dialkylamine, dont les groupes alkyle contiennent ensemble 5 à 15 atomes de carbone.

8. Liant suivant l'une quelconque des revendications précédentes, caractérisé en ce que, pour la préparation du composant (B), on utilise, comme amine aliphatique secondaire, la di-n-butylamine.

9. Liant suivant l'une quelconque des revendications précédentes, caractérisé en ce que les composants (A) et (B) sont amenés à réagir partiellement entre eux à température élevée.

10. Liant suivant la revendication 9, caractérisé en ce que les composants (A) et (B) sont amenés à réagir partiellement entre eux à une température de 35 à 110 °C.

11. Procédé de préparation d'un liant contenant des groupes amino basiques non-tertiaires ainsi que des bases de Mannich phénoliques et diluable à l'eau par addition d'acide, caractérisé en ce que l'on mélange avec 10 à 50% en poids d'une ou plusieurs bases de Mannich phénoliques 50 à 90% en poids d'un produit de polymérisation, polycondensation ou polyaddition ayant un poids moléculaire moyen de 800 à 8000 et une teneur en groupes amino basiques, primaires et/ou secondaires, de 0,8 à 8 équivalents par 1000 unités de poids moléculaire, et en ce qu'éventuellement on les amène à réagir partiellement ensemble à une température de 35 à 110 °C, avec cette condition que les bases de Mannich sont préparées à partir

a) d'un ou plusieurs polyphénols polynucléaires,

b) de formaldéhyde ou d'un composé fournissant du formaldéhyde et

c) d'une ou plusieurs amines aliphatiques secondaires

en ne mettant en œuvre pas plus d'un équivalent environ de l'amine secondaire (c) et pas plus de 2 équivalents de formaldéhyde (b) par équivalent des groupes hydroxyle phénoliques du polyphénol (a).

12. Procédé de fabrication d'un revêtement sur un objet électriquement conducteur par électrodéposition cathodique par trempage électrophorétique, caractérisé en ce que l'on immerge l'objet électriquement conducteur monté en cathode dans un bain aqueux de trempage électrophorétique ayant une teneur en matières solides de 5 à 30% en poids et contenant un liant rendu diluable à l'eau par addition d'un acide suivant l'une des revendications 1 à 10, éventuellement en combinaison avec d'autres liants, des pigments et d'autres adjuvants et additifs usuels dans le cas d'une électrodéposition par trempage électrophorétique, en ce que l'on dépose un revêtement sur l'objet électriquement conducteur à des températures de 15 à 40 °C en l'espace d'environ 1 à 5 minutes et sous une tension de 50 à 500 V, et en ce que l'on durcit le revêtement à des températures de 120 à 200 °C.

13. Utilisation du liant suivant l'une quelconque des revendications 1 à 10 pour l'électrodéposition cathodique, par trempage électrophorétique, d'un revêtement sur des objets électriquement conducteurs, le liant, éventuellement combiné avec d'autres liants, des pigments et d'autres adjuvants et additifs usuels dans le cas d'une électrodéposition par trempage électrophorétique, étant rendu diluable à l'eau par addition d'un acide.

**Revendications pour l'Etat Contractant: AT**

1. Procédé de préparation de liants pour l'électrodéposition cathodique par trempage électrophorétique, qui sont diluables à l'eau par addition d'acide et qui contiennent des groupes amino basiques non-tertiaires ainsi que des bases de Mannich phénoliques, ces liants consistant en un mélange ou un précondensat de

(A) 50 à 90% en poids d'un produit de polymérisation, polycondensation ou polyaddition ayant un poids moléculaire moyen de 800 à 8000 et une teneur en groupes amino basiques, primaires et/ou secondaires, de 0,8 à 8 équivalents par 1000 unités de poids moléculaire et

(B) 10 à 50% en poids d'une ou plusieurs bases de Mannich phénoliques, préparées à partir

a) d'un ou plusieurs polyphénols polynucléaires,

b) de formaldéhyde ou d'un composé fournissant du formaldéhyde et

c) d'une ou plusieurs amines aliphatiques secondaires,

la somme des pour-cent indiqués en (A) et (B) étant 100, caractérisé en ce que, pour la préparation du composant (B), on ne met en œuvre pas plus d'un équivalent de l'amine secondaire (c) et pas plus de 2 équivalents de formaldéhyde (b) par équivalent des groupes hydroxyle phénoliques du polyphénol (a).

2. Procédé suivant la revendication 1, caractérisé en ce que, pour la préparation du composant (B), on met en œuvre 0,5 à 1 équivalent de l'amine secondaire (c) et 0,5 à 2 équivalents de formaldéhyde (b) par équivalent des groupes hydroxyle phénoliques du polyphénol (a).

3. Procédé suivant la revendication 1 ou 2, caractérisé en ce que l'on utilise, comme composant (A), un produit de réaction d'une diamine aliphatique et d'une résine époxy aromatique.

4. Procédé suivant la revendication 3, caractérisé en ce que le produit de réaction d'une diamine aliphatique et d'une résine époxy aromatique est modifié par une réaction complémentaire avec des acides mono- et/ou dicarboxyliques.

5. Procédé suivant l'une quelconque des revendications précédentes, caractérisé en ce que, pour la préparation du composant (B), on utilise, comme polyphénol polynucléaire (a), un produit de réaction du bisphénol A et d'une quantité inférieure à la quantité stoechiométrique d'un éther diglycidylique de bisphénol A.

6. Procédé suivant la revendication 5, caractérisé en ce que, pour la préparation du composant (B), on utilise, comme polyphénol polynucléaire (a), un produit de réaction du bisphénol A et d'un éther diglycidylique du bisphénol A, avec cette condition que l'on met en œuvre jusqu'à 0,8 équivalent de groupes époxy d'un éther diglycidylique de bisphénol A par équivalent de groupes hydroxyle phénoliques du bisphénol A.

7. Procédé suivant l'une quelconque des revendications précédentes, caractérisé en ce que, pour la préparation du composant (B), on utilise, comme amine aliphatique secondaire, au moins une dialkylamine, dont les groupes alkyle contiennent ensemble 5 à 15 atomes de carbone.

8. Procédé suivant l'une quelconque des revendications précédentes, caractérisé en ce que, pour la préparation du composant (B), on utilise, comme amine aliphatique secondaire, la di-n-butylamine.

9. Procédé suivant l'une quelconque des revendications précédentes, caractérisé en ce que les composants (A) et (B) sont amenés à réagir partiellement entre eux à température élevée.

10. Procédé suivant la revendication 9, caractérisé en ce que les composants (A) et (B) sont amenés à réagir partiellement entre eux à une température de 35 à 110 °C.

11. Procédé de préparation d'un liant contenant des groupes amino basiques non-tertiaires ainsi que des bases de Mannich phénoliques et diluable à l'eau par addition d'acide, caractérisé en ce que l'on mélange avec 10 à 50% en poids d'une ou plusieurs bases de Mannich phénoliques 50 à 90% en poids d'un produit de polymérisation, polycondensation ou polyaddition ayant un poids moléculaire moyen de 800 à 8000 et une teneur en groupes amino basiques, primaires et/ou secondaires, de 0,8 à 8 équivalents par 1000 unités de poids moléculaire, et en ce qu'éventuellement on les amène à réagir partiellement ensemble à une température de 35 à 110 °C, avec cette condition que les bases de Mannich sont préparées à partir

a) d'un ou plusieurs polyphénols polynucléaires,

b) de formaldéhyde ou d'un composé fournissant du formaldéhyde, et

c) d'une ou plusieurs amines aliphatiques secondaires,

en ne mettant en œuvre pas plus d'un équivalent environ de l'amine secondaire (c) et pas plus de 2 équivalents de formaldéhyde (b) par équivalent des groupes hydroxyle phénoliques du polyphénol (a).

12. Procédé de fabrication d'un revêtement sur un objet électriquement conducteur par électrodéposition cathodique par trempage électrophorétique, caractérisé en ce que l'on immerge l'objet électriquement conducteur monté en cathode dans un bain aqueux de trempage électrophorétique ayant une teneur en matières solides de 5 à 30% en poids et contenant un liant rendu diluable à l'eau par addition d'un acide suivant l'une des revendications 1 à 10, éventuellement en combinaison avec d'autres liants, des pigments et d'autres adjuvants et additifs usuels dans le cas d'une électrodéposition par trempage électrophorétique, en ce que l'on dépose un revêtement sur l'objet électriquement conducteur à des températures de 15 à 40 °C en l'espace d'environ 1 à 5 minutes et sous une tension de 50 à 500 V, et en ce que l'on durcit le revêtement à des températures de 120 à 200 °C.